# EUROPEAN PATENT APPLICATION

(11) **EP 4 252 546 A1**
(43) Date of publication of application: **04.10.2023**
(21) Application number: 21898711.3
(22) Date of filing: 29.11.2021
(51) Int. Cl.: A23L 7/157, A23L 7/10, A23L 29/212, A23L 29/10, A23L 27/30

(54) **BREADCRUMB AND PREPARATION METHOD THEREFOR**

(30) Priority: 30.11.2020 KR 20200165102
(71) Applicant: CJ Cheiljedang Corporation, Seoul 04560 (KR)
(72) Inventor: KIM, Il Hwan, Seoul 04560 (KR); LEE, Su Hyun, Seoul 04560 (KR); PARK, Hong Wook, Seoul 04560 (KR); KIM, Gun Tae, Seoul 04560 (KR); YU, Young, Seoul 04560 (KR); KANG, Ki Moon, Seoul 04560 (KR)
(74) Representative: Mummery, Thomas Zack
(86) International application number: PCT/KR2021/017738
(87) International publication number: WO 2022/114886

(57) **Abstract**

The present invention relates to novel breadcrumbs and a preparation method therefor. The breadcrumbs of the present application have a high proportion of larger bread grains than those of typical breadcrumbs, are crisper than typical breadcrumbs with no yeast fermentation processes, keep a crispy texture even after being cooked, and have high stability in distribution. In addition, the breadcrumbs of the present application look bright in color, retain the bright color even after being cooked, and are highly efficient when it comes to mass production with no need of yeast fermentation and aging processes for the preparation thereof.

## Description

### TECHNICAL FIELD

### Technical Field

The present invention relates to novel breadcrumbs and a preparation method therefor.

### BACKGROUND ART

Breadcrumbs are a food material used as a batter for fried foods or fish or meat cutlets after pulverizing bread in the form of powder, and prevent food from losing its original taste and make a chewing texture crispy to improve the taste of food. Breadcrumbs currently used in cooking are prepared by drying bread prepared through fermentation by adding yeast to flour, which is a main ingredient, and then pulverizing the bread.

As a related art for preparing breadcrumbs, Korean Patent Laid-Open Publication No. 10-2017-0112740 discloses a method for preparing breadcrumbs by fermenting and steaming dough of breadcrumbs and then pulverizing the dough, and Korean Patent Laid-Open Publication No. 10-2020-0003591 discloses a method for preparing breadcrumbs by extruding rice flour as a main raw material.

Breadcrumbs which are currently mass-produced and commercially available have relatively small grains, resulting in an unsatisfactory texture, fail to keep a crispy texture after long-term distribution, and are susceptible to color changes after cooking. In addition, a typical method of preparing breadcrumbs requires yeast fermentation and aging processes for preparing bread, leading to low efficiency in the preparation process.

### [Related Art Document]

Korean Patent Laid-Open Publication No. 10-2017-0112740
Korean Patent Laid-Open Publication No. 10-2020-0003591

### DISCLOSURE OF THE INVENTION

### TECHNICAL PROBLEM

The present inventors have made research efforts to obtain breadcrumbs that do not require a bread preparation process through yeast fermentation and are capable of keeping a crispy texture after a long shelf life and even after cooking. As a result, the inventors have completed the present application by confirming that when breadcrumbs are prepared by including starch in flour and using a leavening agent combining specific ingredients without using yeast, breadcrumbs having low water activity, and thus having high stability in distribution, keeping a crispy texture even after cooking, and having a high proportion of large bread grains may be prepared.

Accordingly, an aspect of the present invention provides breadcrumbs having a high proportion of large bread grains, keeping a crispy texture even after cooking, and having a bright color.

Another aspect of the present invention provides a method for preparing breadcrumbs having the characteristics described above.

Another aspect of the present invention provides a food product including breadcrumbs having the characteristics described above.

### TECHNICAL SOLUTION

To achieve the purposes described above,

According to an aspect of the present invention, provided are breadcrumbs in the form of powder containing bread grains, wherein the bread grains include flour and starch, and the breadcrumbs have a grain size distribution in which a proportion of bread grains having a size of 2 mm or greater is 60 to 70 wt%.

According to another aspect of the present invention, provided is a method for preparing breadcrumbs, the method including the steps of:
(a) preparing a premix including flour, starch, sugar, refined salt, a leavening agent, an emulsifier, and a sweetener;
(b) adding a liquid raw material to the premix and mixing to form a dough;
(c) evening the dough; and
(d) cooling and pulverizing the dough subjected to evening to prepare bread grains.

Another aspect of the present invention provides a food product including the breadcrumbs described above.

Hereinafter, the present application will be described in detail.

According to an aspect, the present application provides breadcrumbs in the form of powder containing bread grains, wherein the bread grains include flour and starch, and the breadcrumbs have a grain size distribution in which a proportion of bread grains having a size of 2 mm or greater is 60 to 70 wt%.

In the present application, the breadcrumbs are in the form of powder containing small bread grains.

The breadcrumbs of the present application may not be uniform in size and may be composed of bread grains in various sizes, and bread grains may have an upper limit of 5 mm, specifically 0.01 to 5 mm, 0.01 to 4.9 mm, 0.01 to 4.8 mm, 0.01 to 4.7 mm, 0.01 to 4.6 mm, 0.01 to 4.5 mm, 0.01 to 4.4 mm, or 0.01 to 4.3 mm in size, but the embodiment of the present invention is not limited thereto.

The bread grains in the present application may be round or non-uniform in shape.

In the present application, "size (grain size)" of the bread grains may indicate a greatest length among lengths across the bread grains.

The term "grain size distribution" used herein with respect to the bread grains indicates a distribution ratio of the size of the bread grains constituting the breadcrumbs.

In the present application, breadcrumbs may be characterized by the size distribution of the bread grains constituting the breadcrumbs, that is, the grain size distribution of the bread grains.

A proportion of bread grains having a size of 2 mm or greater in the breadcrumbs of the present application may be 60 to 70 wt%, specifically, 61 to 69 wt%, 62 to 68 wt%, or 63 to 67 wt%.

In an embodiment, a lower limit of the proportion of bread grains having a size of 3.35 mm or greater in the breadcrumbs may be 25 wt%, 26 wt%, 27 wt%, 28 wt%, or 28.5 wt%, and an upper limit thereof may be 35 wt%, 34 wt%, 33 wt%, 32 wt%, 31 wt%, 30 wt%, or 29 wt%.

Specifically, the proportion of bread grains having a size of 3.35 mm or greater in the breadcrumbs of the present application may be 25 to 35 wt%, 26 to 34 wt%, 27 to 33 wt%, 28 to 32 wt%, 28.5 to 31 wt%, 28.5 to 30 wt%, or 28.5 to 29 wt%.

In another embodiment, in the breadcrumbs of the present application, the proportion of bread grains having a size of 2 mm or greater may be 60 to 70 wt%, 61 to 69 wt%, 62 to 68 wt%, or 63 to 67 wt%, and also the proportion of bread grains having a size of 3.35 mm or greater may be 25 to 35 wt%, 26 to 34 wt%, 27 to 33 wt%, 28 to 32 wt%, 28.5 to 31 wt%, 28.5 to 30 wt%, or 28.5 to 29 wt%.

In the present application, as the proportion of bread grains having a size of 2 mm or greater is 60 to 70 wt%, breadcrumbs having a crispy and rich texture is obtained, and the texture is kept even after cooking.

The bread grains constituting the breadcrumbs in the present application may include flour and starch.

In an embodiment, a lower limit of an amount of the flour in the bread grains may be 30 wt%, 31 wt%, 32 wt%, 33 wt%, 34 wt%, or 45 wt%, and an upper limit of an amount of flour may be 60 wt%, 59 wt%, 58 wt%, 57 wt%, 56 wt%, or 55 wt%. Specifically, the flour in the bread grains may be in an amount of 30 to 60 wt%, 31 to 59 wt%, 32 to 58 wt%, 33 to 57 wt%, 34 to 56 wt%, or 35 to 55 wt%.

In an embodiment, a lower limit of an amount of the starch in the bread grains may be 5 wt%, 6 wt%, 7 wt%, 8 wt%, 9 wt%, or 10 wt%, and an upper limit of an amount of the starch may be 35 wt%, 34 wt%, 33 wt%, 32 wt%, 31 wt%, or 30 wt%. Specifically, the starch in the bread grains may be in an amount of 5 to 35 wt%, 6 to 34 wt%, 7 to 33 wt%, 8 to 32 wt%, 9 to 31 wt%, or 10 to 30 wt%.

As the flour and the starch are regulated in the amount ranges as described above, the breadcrumbs obtain a crispy and rich texture, and the texture is kept even after cooking.

The starch included in the bread grains of the breadcrumbs of the present application may be, for example, corn starch, potato starch, tapioca starch, sweet potato starch, or arrowroot starch, and specifically may be corn starch. When the corn starch is included, breadcrumbs having a crispy texture and being hard enough not to easily crumble may be prepared.

The bread grains of the breadcrumbs in the present application may further include a leavening agent. When the leavening agent is included, a fermentation process before evening and an aging process after ovening may not be needed for preparing breadcrumbs, and accordingly, the preparation of breadcrumbs may become efficient and economical. In addition, breadcrumbs having a crispier texture than typical breadcrumbs.

The leavening agent may be in an amount of greater than 0 wt% and 10 wt% or less. Specifically, the amount may be greater than 0 wt% and 9.5 wt% or less, greater than 0 wt% and 9 wt% or less, greater than 0 wt% and 8.5 wt% or less, greater than 0 wt% and 8 wt% or less, greater than 0 wt% and 7.5 wt% or less, greater than 0 wt% and 7 wt% or less, greater than 0 wt% and 7.5 wt% or less, greater than 0 wt% and 7 wt% or less, greater than 0 wt% and 6.5 wt% or less, or greater than 0 wt% and 6 wt% or less.

In an embodiment, the leavening agent may be at least one selected from the group consisting of sodium acid pyrophosphate, sodium hydrogen carbonate, monobasic calcium phosphate, gluconodeltalactone, potassium deuterium, and burnt alum.

In an embodiment, the sodium acid pyrophosphate, the sodium hydrogen carbonate, the monobasic calcium phosphate, the gluconodeltalactone, the potassium deuterium, or burnt alum may each be in an amount of greater than 0 wt% and 2 wt% or less.

In the present application, the bread grains constituting the breadcrumbs may further include one or more components selected from the group consisting of an emulsifier and a sweetener.

The emulsifier may be, for example, glycerin fatty acid ester, calcium stearoyl-2-lactylate (CSL), sodium stearoyl-2-lactylate (SSL), lecithin, sugar ester, or diacetyl tartaric acid ester of mono- and diglycerides (DATEM), but is not limited thereto.

The sweetener may be enzymatically modified stevia, erythritol, maltitol, xylitol, stevia extract, or licorice extract, but is not limited thereto.

In an embodiment, the emulsifier in the bread grains may be in an amount of greater than 0 wt% and 2 wt% or less, and the sweetener may be in an amount of greater than 0 wt% and 2 wt% or less. When the emulsifier is included in the amount described above, breadcrumbs having a crispier texture may be prepared. In addition, when the sweetener is included in the amount described above, breadcrumbs looking bright yellow in color may be prepared, and when the sweetener is applied to fried foods, an appetizing fried food color may be obtained.

In the present application, the bread grains constituting the breadcrumbs may further include one or more components selected from the group consisting of sugar and refined salt.

The sugar may be, for example, white sugar, and the white sugar in the bread grains may be in an amount of 1 to 10 wt%.

The refined salt in the bread grains may be in an amount of 1 to 5 wt%.

A liquid raw material is further added to a premix including flour and starch to prepare the bread grains, and the liquid raw material may be one or a mixture of two or more selected from the group consisting of water, dairy products, eggs, honey, syrup, and vegetable oil.

The dairy products may be, for example, one or more selected from the group consisting of milk, cream, yogurt, and sour cream.

The eggs may be at least one selected from the group consisting of whole eggs, egg yolks, and egg whites.

The vegetable oil may be, for example, soybean oil, sunflower oil, canola oil, or grapeseed oil.

The liquid raw material may be included in an amount of 1 to 35 parts by weight with respect to 100 parts by weight of a raw material (dough) for preparing breadcrumbs. The liquid raw material is included in the amount described above to play a role in physical properties of the dough for preparing breadcrumbs, so that final breadcrumbs may be prepared to have a desirable texture and desirable physical properties.

In an embodiment, the bread grains of the breadcrumbs of the present application include (i) flour and corn starch; and (ii) sodium acid pyrophosphate, sodium hydrogen carbonate, and monobasic calcium phosphate as leavening agents.

In another embodiment, the bread grains of the breadcrumbs of the present application include (i) flour and corn starch; (ii) sodium acid pyrophosphate, sodium hydrogen carbonate, and monobasic calcium phosphate as leavening agents; and (iii) an emulsifier and a sweetener.

In another embodiment, the bread grains of the breadcrumbs of the present application include (i) flour and corn starch; (ii) sodium acid pyrophosphate, sodium hydrogen carbonate, and monobasic calcium phosphate as leavening agents; (iii) an emulsifier and a sweetener; and (iv) one or more components selected from the group consisting of a liquid raw material, sugar, and refined salt.

The bread grains of the breadcrumbs of the present application may be prepared without being subjected to a yeast fermentation process. In an embodiment, the bread grains of the breadcrumbs of the present application may not include a yeast fermentation product or yeast. The "yeast fermentation product" indicates a product produced by mixing yeast and raw materials for preparing the breadcrumbs and then fermenting the mixture.

The bread grains of the breadcrumbs of the present application may have a moisture content of less than 8 wt%. Specifically, the moisture content of the bread grains may be less than 8 wt%, less than 7.9 wt%, less than 7.8 wt%, less than 7.7 wt%, or less than 7.6 wt%. A lower limit of the moisture content of the bread grains may be 1 wt%, 2 wt%, 3 wt%, 4 wt%, 4.5 wt%, 5 wt%, 5.5 wt%, or 6 wt%.

The bread grains of the breadcrumbs of the present application may have a water activity of less than 0.55 aw.

Specifically, an upper limit of the water activity of the bread grains of the breadcrumbs of the present application may be 0.55 aw, 0.54 aw, 0.53 aw, 0.52 aw, 0.51 aw, or 0.5 aw, and a lower limit thereof may be 0.1 aw, 0.2 aw, 0.3 aw, 0.4 aw, or 0.45 aw. More specifically, the water activity of the bread grains of the breadcrumbs of the present application may be 0.1 to 0.55 aw, 0.2 to 0.55 aw, 0.3 to 0.55 aw, 0.4 to 0.55 aw, or 0.45 to 0.55 aw. As the moisture content and/or the water activity are/is in the above range, it is beneficial that greater distribution stability is obtained due to high safety against microorganisms.

In an embodiment, in the colorimetric analysis of the bread grains of the breadcrumbs of the present application, an L value may be 70 to 80, an a value may be 1 to 2, and a b value may be 20 to 30. Within the above chromaticity ranges, the breadcrumbs look light yellow to produce an appetizing color after being fried when applied to frying.

The breadcrumbs of the present application may be breadcrumbs for fried foods. When used in the fried foods, the breadcrumbs may exhibit a crisper and more desirable fried food color than typical breadcrumbs. In addition, it remains crispy after cooking.

Another aspect of the present application provides a method for preparing breadcrumbs, the method including the steps of:
(a) preparing a premix comprising flour, starch, sugar, refined salt, a leavening agent, an emulsifier, and a sweetener;
(b) adding a liquid raw material to the premix and mixing to form a dough;
(c) evening the dough; and
(d) cooling and pulverizing the dough subjected to evening to prepare bread grains.

The premix may also be referred to as a solid raw material in contrast to a liquid raw material, which will be described later.

In an embodiment, the method may further include panning the dough after the step (b) and before the step (c).

In an embodiment, the evening of step (c) may be performed in an oven preheated to 100 to 200 °C for 30 to 120 minutes. More specifically, the temperature of the preheated oven upon the evening may be 100 to 200 °C, 100 to 190 °C, 100 to 180 °C, 100 to 170 °C, 100 to 160 °C, or 100 to 150 °C, and the evening may be performed in the preheated oven described above for 30 to 120 minutes, 30 to 110 minutes, 30 to 100 minutes, 30 to 90 minutes, or 30 to 80 minutes.

In an embodiment, the pulverizing of the cooled dough of step (d) may include pulverizing the dough at a rate of 3.5 to 30 Hz, using a 1 to 20 mm mesh sieve.

In an embodiment, after the step (d) above, a step (e) of drying the pulverized bread grains may be further included.

In an embodiment, the drying in the step (e) may be performed at a temperature of 50 to 150 °C.

In the step (a), a lower limit of an amount of flour may be 30 parts by weight, 31 parts by weight, 32 parts by weight, 33 parts by weight, 34 parts by weight, or 45 parts by weight, with respect to 100 parts by weight of the dough, and an upper limit of an amount of flour may be 60 parts by weight, 59 parts by weight, 58 parts by weight, 57 parts by weight, 56 parts by weight, or 55 parts by weight, with respect to 100 parts by weight of the dough. Specifically, the flour may be in an amount of 30 to 60 parts by weight, 31 to 59 parts by weight, 32 to 58 parts by weight, 33 to 57 parts by weight, 34 to 56 parts by weight, or 35 to 55 parts by weight, with respect to 100 parts by weight of the dough.

The starch may be, for example, corn starch, potato starch, tapioca starch, sweet potato starch, or arrowroot starch, and specifically may be corn starch.

In the step (a), a lower limit of an amount of the starch may be 5 parts by weight, 6 parts by weight, 7 parts by weight, 8 parts by weight, 9 parts by weight, or 10 parts by weight, with respect to 100 parts by weight of the dough, and an upper limit of an amount of the starch may be 35 parts by weight, 34 parts by weight, 33 parts by weight, 32 parts by weight, 31 parts by weight, or 30 parts by weight, with respect to 100 parts by weight of the dough. Specifically, the starch may be in an amount of 5 to 35 parts by weight, 6 to 34 parts by weight, 7 to 33 parts by weight, 8 to 32 parts by weight, 9 to 31 parts by weight, or 10 to 30 parts by weight, with respect to 100 parts by weight of the dough.

In the step (a), the leavening agent may be at least one selected from the group consisting of sodium acid pyrophosphate, sodium hydrogen carbonate, monobasic calcium phosphate, gluconodeltalactone, potassium deuterium, and burnt alum.

The leavening agent may be in an amount of greater than 0 parts by weight and 10 parts by weight or less with respect to 100 parts by weight of the dough. Specifically, with respect to 100 parts by weight of the dough, the amount may be greater than 0 parts by weight and 9.5 parts by weight or less, greater than 0 parts by weight and 9 parts by weight or less, greater than 0 parts by weight and 8.5 parts by weight or less, greater than 0 parts by weight and 8 parts by weight or less, greater than 0 parts by weight and 7.5 parts by weight or less, greater than 0 parts by weight and 7 parts by weight or less, greater than 0 parts by weight and 7.5 parts by weight or less, greater than 0 parts by weight and 7 parts by weight or less, greater than 0 parts by weight and 6.5 parts by weight or less, or greater than 0 parts by weight and 6 parts by weight or less.

Specifically, the sodium acid pyrophosphate, the sodium hydrogen carbonate, the monobasic calcium phosphate, the gluconodeltalactone, the potassium deuterium, or burnt alum may each be in an amount of greater than 0 parts by weight and 2 parts by weight or less, with respect to 100 parts by weight of the dough.

The emulsifier may be, for example, glycerin fatty acid ester, calcium stearoyl-2-lactylate (CSL), sodium stearoyl-2-lactylate (SSL), lecithin, sugar ester, or diacetyl tartaric acid ester of mono- and diglycerides (DATEM), but is not limited thereto.

The sweetener may be enzymatically modified stevia, erythritol, maltitol, xylitol, stevia extract, or licorice extract, but is not limited thereto.

The emulsifier may be in an amount of greater than 0 parts by weight and 2 parts by weight or less with respect to 100 parts by weight of the dough, and the sweetener may be in an amount of greater than 0 parts by weight and 2 parts by weight or less with respect to 100 parts by weight of the dough.

For example, white sugar may be used as the sugar, and the white sugar may be in an amount of 1 to 10 parts by weight with respect to 100 parts by weight of the dough.

The refined salt may be used in an amount of 1 to 5 parts by weight with respect to 100 parts by weight of the dough.

In the step (b), the liquid raw material may be one or a mixture of two or more selected from the group consisting of water, dairy products, eggs, honey, syrup, and vegetable oil.

The dairy products may be one or more selected from the group consisting of milk, cream, yogurt, and sour cream.

The eggs may be at least one selected from the group consisting of whole eggs, egg yolks, and egg whites.

The vegetable oil may be, for example, soybean oil, sunflower oil, canola oil, or grapeseed oil.

The liquid raw material may be in an amount of 1 to 35 parts by weight with respect to 100 parts by weight of the dough.

The method for preparing breadcrumbs of the present application may not include a yeast fermentation process. In the preparation method of the present application, yeast is added to raw materials of breadcrumbs, so that a fermenting process may not be included. The yeast may be, for example, a yeast of Saccharomyces sp.

Another aspect of the present invention provides a food product including the breadcrumbs described above. The food product may be fried foods, but is not limited thereto, and may be, for example, pork cutlets, fish cutlets, chicken dishes (e.g., fried chicken or grilled chicken), hot dogs, corn dogs, casseroles, soups, stews, meat loaf, salads, mandu, gyoja, pizza, nuggets, chinese style foods, hamburger steak, meatballs, grilled foods (tteokgalbi, Korean-style meatballs, and the like), processed meat products (bacon, ham, and the like), fresh processed products (fish cake, crab meat, tofu, and the like), breads (pastries, muffins, and the like), or pasta, but is not limited thereto.

### ADVANTAGEOUS EFFECTS

The present application provides breadcrumbs having a high proportion of larger bread grains than those of typical breadcrumbs.

The breadcrumbs of the present application are crisper than typical breadcrumbs, with no yeast fermentation processes, thereby keeping a crispy texture even after being cooked.

The breadcrumbs of the present application have low water activity to keep a crispy texture even after a long period of distribution, and thus have high distribution stability.

The breadcrumbs of the present application look bright in color, and may keep the bright color even after being cooked.

The breadcrumbs of the present application are highly efficient when it comes to mass production, with no need of yeast fermentation and aging processes when being prepared.

However, the effects of the present application are not limited to the aforesaid, and other effects which are not described herein will be clearly understood by those skilled in the art from descriptions below.

### BRIEF DESCRIPTION OF THE DRAWINGS

FIG. 1 is a graph showing the results of determining moisture content after cooking for "S breader", the breadcrumbs of the present application and typical breadcrumbs; and
FIG. 2 is a graph showing the results of determining TA after cooking for "S breader", the breadcrumbs of the present application and typical breadcrumbs.

### MODE FOR CARRYING OUT THE INVENTION

Hereinafter, the present application will be described in detail with reference to Examples. However, the following Examples specifically show the present application, and the content of the present application is not limited by the following Examples.

### Example

### Preparation Example 1: Preparation of breadcrumbs

### (1) Preparation of premix (solid raw material)

With respect to 100 parts by weight of dough, flour (CJ CheilJedang, Korea) in an amount of 35 to 55 parts by weight, corn starch (CJ CheilJedang, Korea) in an amount of 10 to 30 parts by weight, a leavening agent in an amount of 1 to 6 parts by weight [sodium acid pyrophosphate (Yeonglim Chemical, Korea) Israel) in an amount of greater than 0 to 2 parts by weight, sodium hydrogen carbonate (Yeonglim Chemical, USA) in an amount of greater than 0 to 2 parts by weight, monobasic calcium phosphate (Gwangilfood, Korea) in an amount of greater than 0 to 2 parts by weight], white sugar (CJ CheilJedang, Korea) in an amount of 1 to 10 parts by weight, refined salt (Hanjusalt, Korea) in an amount of greater than 0 to 5 parts by weight, an emulsifier (Yee Yon Chemical, Malaysia) in an amount of greater than 0 to 2 parts by weight, and a sweetener (Macrocare, Korea) in an amount of greater than 0 to 2 parts by weight were each weighed. The weighed raw materials were mixed to prepare a premix.

### (2) Preparation of dough

In the prepared premix (solid raw material), a liquid raw material including soybean oil, water, and vegetable oil (CJ CheilJedang) in an amount of 1 to 35 parts by weight was weighed with respect to 100 parts by weight of dough, and added to the premix, and then evenly mixing at a low rate for 1 to 10 minutes to prepare a dough.

### (3) Panning and Ovening

The dough prepared by mixing was subjected to panning in an amount of 1 to 3 kg with respect to a flat iron plate. The dough subjected to panning was subjected to ovening in an oven preheated to 100 to 200 °C for 30 to 120 minutes and then sufficiently cooled.

### (4) Pulverizing

The cooled dough after the ovening was pulverized at a rate of 3.5 to 30 Hz, using a 1 to 20 mm mesh net. The pulverized breadcrumbs were used as without further treatment or were additionally dried at 50 to 150 °C.

### Experimental Example 1: Evaluation on characteristics of breadcrumbs

For comparison with the breadcrumbs of the present invention, commercially available breadcrumbs, frying mix, and soboru products were selected. In addition, for comparison in regard to quality inspection and characteristics, grain size distribution, moisture content, water activity, color, and TA analysis were performed on the breadcrumbs of the present invention and the selected products.

### Experimental Example 1-1. Raw materials of commercially available breadcrumbs, frying mix, and soboru, and a preparation method

### (1) Breadcrumbs

The product name is Beksul breadcrumbs (producer: BK), distributed at room temperature, a food type of processed grain products, and used as breader. Raw materials such as flour in an amount of 90 wt% or greater, glucose in an amount of 1 to 2 wt%, food shortening in an amount of 1 to 2 wt%, refined salt in an amount of 1 to 2 wt%, yeast (yeast, sorbitan monostearate, vitamin C), and a mixed agent (starch, calcium sulfate, refined salt, ammonium chloride, vitamin C) are used for preparation. Preparation processes include weighing, mixing, panning, fermenting, evening, cooling, aging, pulverizing, and packaging.

### (2) Frying mix

The product name is Beksul Frying mix (producer: CJ CheilJedang Yeongdeungpo Factory), distributed at room temperature, a food type of processed grain products, and used as dough. Raw materials such as powder materials (flour and starch) in an amount of 90 wt% or greater, corn flour, synthetic leavening agent (sodium hydrogen carbonate, sodium acid pyrophosphate, starch, monobasic calcium phosphate, calcium stearate), refined salt, fried rice flour, garlic powder concentrates, onion powder mix, and pepper powder are used for preparation. Preparation processes include weighing, mixing, and packaging.

### (3) Soboru

The product name is soboru powder dough (producer: Seoul-Food), is distributed in the freezer, is a type of bread, is a frozen food that is consumed after heating, and is used as topping. Raw materials such as flour in an amount of 40 to 50 wt%, white sugar in an amount of 15 to 25 wt%, fat and oils (processed butter, vegetable oil, processed oil, palm oil, peanut butter) in an amount of 20 to 40 wt%, an emulsifier, whey powder, corn powder, whole egg liquid, a mixed agent, food additives (synthetic leavening agent), and sodium hydrogen carbonate are used for preparation. Preparation processes include weighing, mixing, and packaging.

### Experimental Example 1-2. Method of evaluating characteristics of breadcrumbs

### (1) Determination of grain size distribution

Experimental sieves (Cheonggye Commercial Corporation, Korea) having a sieve size of 1 mm (No.18), 2 mm (No.10), and 3.35 mm (No.6) were sequentially stacked and 100 g of sample was shifted manually for 30 seconds. After the sifting was completed, the weight of grains filtered for each sieve was determined and a calculated distribution value was reported.

### (2) Determination of moisture content

25 g of sample was repeatedly determined three times through a method of atmospheric pressure heating and drying, and an average value was reported.

### (3) Determination of water activity

A certain amount of sample was analyzed, using a water activity meter, Dew Point Water Activity Meter (Aqualab 4TE, USA), and a value was reported.

### (4) Determination of chromaticity

30 g of sample was deep-fried for 90 seconds in soybean oil (CJ CheilJedang, Korea) preheated to 170 °C. The sample before and after cooking was analyzed, using a colorimetry spectrophotometer CM-3500d (Minolta, Japan), and L (brightness), a (redness), and b (yellowness) values were reported.

### (5) Determination of TA

A certain amount of sample was analyzed, using a Texture Analyzer TA XT-Plus (Stable Micro System, UK). TA analysis conditions were in accordance with AACC 74-09 Standard Method, and detailed standards are shown in Table 1 below. During the TA analysis, a compression force value, an average value, and a standard deviation were reported.

**[Table 1]**

| | |
|---|---|
| Probe | Round, 35 mm |
| Mode | Measure force in compression |
| Option | Return to start |
| Pre-test speed | 1.0 mm/s |
| Test speed | 1.7 mm/s |
| Post-test speed | 10.0 mm/s |
| Strain | 40% |
| Trigger Type | Auto-5g |
| Tare Mode | Auto |
| Data Acquisition Rate | 250 pps |

### Experimental Example 1-3. Results of evaluating characteristics of breadcrumbs

### (1) Results of determining grain size distribution

The results of determining the grain size distribution of the breadcrumbs of the present application and the products (breadcrumbs, frying mix, soboru) from other manufacturers are shown in Table 2 below.

**[Table 2]**

| Item | S breader | Breadcrumbs | Frying mix | Soboru |
|---|---|---|---|---|
| ≥ 3.35 mm | 29.74 | 1.45 | 0.00 | 24.25 |
| 2 to 3.34 mm | 36.18 | 33.90 | 0.00 | 20.65 |
| 1 to 1.99 mm | 18.68 | 48.88 | 0.00 | 31.18 |
| <1 mm | 15.40 | 15.77 | 100.0 | 23.92 |
| Imag e | 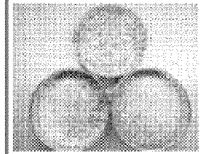 | 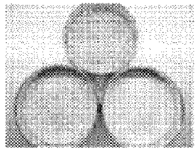 | 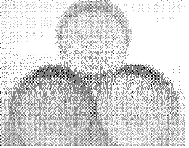 | 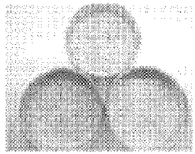 |

In Table 2, "S breader" is the breadcrumbs of the present application. In the "S breader", grains having a size of 2 mm or greater take up about 65.9 wt% and grains having a size of 3.35 mm or greater take up about 29.7 wt%, and accordingly, it is determined that the S breader has a significantly high proportion of greater bread grains than those of breadcrumbs, frying mix, and soboru from other manufacturers.

### (2) Results of determining moisture content

The results of determining the moisture content of the breadcrumbs of the present application and the products (breadcrumbs, frying mix, soboru) from other manufacturers are shown in Table 3 below.

**[Table 3]**

| Item | S breader | Breadcrumbs | Frying mix | Soboru |
|---|---|---|---|---|
| Moisture content | 7.57 | 6.92 | 12.23 | 12.59 |
| | 7.52 | 6.95 | 12 | 12.66 |
| (%) | 7.2 | 6.97 | 12.06 | 12.29 |
| Average(%) | 7.43 | 6.95 | 12.10 | 12.51 |

In Table 3, "S breader" is the breadcrumbs of the present application. The "S breader" had an average moisture content of 7.43%, which was slightly higher than the breadcrumbs from other manufacturers, and it was found that the S breader had a moisture content, which was about 4 to 5% lower than frying mix and soboru from other manufacturers.

### (3) Results of determining water activity

The results of determining the water activity of the breadcrumbs of the present application and the products (breadcrumbs, frying mix, soboru) from other manufacturers are shown in Table 4 below.

**[Table 4]**

| Item | S breader | Breadcrumbs | Frying mix | Soboru |
|---|---|---|---|---|
| Aw | 0.5070 | 0.5556 | 0.5888 | 0.7496 |

In Table 4, "S breader" is the breadcrumbs of the present application. The "S breader" had a water activity of 0.507 Aw, which was about 0.04 to 0.24 lower than breadcrumbs, frying mix, and soboru from other manufacturers.

### (4) Results of determining chromaticity

The results of determining the chromaticity of the breadcrumbs of the present application and the products (breadcrumbs, frying mix, soboru) from other manufacturers are shown in Table 5 below.

**[Table 5]**

| Item | S breader | | Breadcrumbs | | Frying mix | | Soboru | |
|---|---|---|---|---|---|---|---|---|
| | Before cookin g | After cookin g | Before cookin g | After cookin g | Before cookin g | After cookin g | Before cookin g | After cookin g |
| L | 76.74 | 33.27 | 74.29 | 29.13 | 88.79 | - | 66.46 | 30.49 |
| a | 1.53 | 12.03 | 0.21 | 11.79 | 0.18 | | 4.37 | 10.75 |
| b | 25.55 | 16.51 | 18.68 | 13.35 | 8.70 | | 25.67 | 14.64 |
| Imag e | | 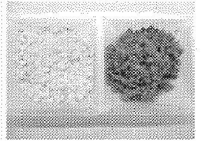 | | 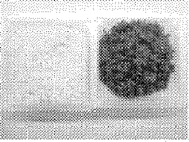 | | 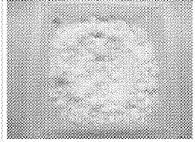 | | 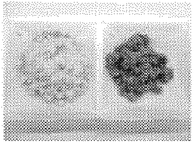 |

In Table 5, "S breader" is the breadcrumbs of the present application. The "S breader" had a bright yellow color, and the brightness thereof was the highest before and after frying at 170 °C for 90 seconds, compared to breadcrumbs and soboru.

### (5) Results of determining TA

The results of determining the TA values of the breadcrumbs of the present application and the products (breadcrumbs, frying mix, soboru) from other manufacturers are shown in Table 6 below.

**[Table 6]**

| Item | S breader | | Breadcrumbs | | Frying mix | | Soboru | |
|---|---|---|---|---|---|---|---|---|
| | peak count+ ( ea) | peak force (g.sec) | peak count+ ( ea) | peak force ( g.sec) | peak count+ ( ea) | peak force (g.sec) | peak count+ (ea) | peak force (g.sec) |
| TA | 40 | 2311.02 | 40 | 2716.43 | 4 | 2677.69 | 2 | 480.69 |
| | 42 | 1806.64 | 30 | 4309.41 | 4 | 2954.68 | 2 | 1477.17 |
| | 43 | 2176.96 | 46 | 3053.98 | 2 | 2836.00 | 2 | 1014.75 |
| Avera ge | 41.67 | 2098.21 | 38.67 | 3359.94 | 3.33 | 2822.79 | 2.00 | 990.87 |
| Standard deviation | 1.53 | 261.25 | 8.08 | 839.40 | 1. 16 | 138.97 | 0.00 | 498.67 |
| Coefficient of variation | 3.67 | 12.45 | 20.90 | 24.98 | 34.64 | 4.92 | 0.00 | 50.33 |

In Table 6, "S breader" is the breadcrumbs of the present application. In the TA analysis, the "S breader" has an average count of peaks of about 42, which was about 3 to 40 more than breadcrumbs, frying mix, and soboru, and had an average peak force of 2098, which was higher than soboru and lower than breadcrumbs and frying mix. Accordingly, the breadcrumbs of the present application was determined to be crispier than typical breadcrumbs, frying mix, and soboru.

### Experimental Example 2: Evaluation of quality of breadcrumbs after cooking

Evaluation of quality after cooking was performed on the breadcrumbs of the present application and commercially available breadcrumbs of other manufacturers. The breadcrumbs of other manufacturers used Beksul breadcrumbs (producer: BK) used in Experimental Example 1. The cooking was performed using a method of deep frying at 165 °C for 2 minutes and 30 seconds.

### Experimental Example 2-1. Method of evaluating quality of products after cooking

### (1) Determination of moisture content

5 g of sample was determined, using an infrared moisture meter and a value determined at 105 °C for 50 minutes was reported.

### (2) Determination of TA

The deep-fried sample was determined three times, using a TA instrument and an average value was reported. Analysis conditions of TA are presented in Table 7 below.

**[Table 7]**

| | |
|---|---|
| Probe | Round, 35 mm |
| Mode | Measure force in compression |
| Option | Return to start |
| Pre-test speed | 1.0 mm/s |
| Test speed | 1.7 mm/s |
| Post-test speed | 10.0 mm/s |
| Distance | 3 mm |
| Trigger Type | Auto-5g |
| Tare Mode | Auto |
| Data Acquisition Rate | 250 pps |

### Experimental Example 2-2. Results of evaluating quality of products after cooking

### (1) Results of determining moisture content

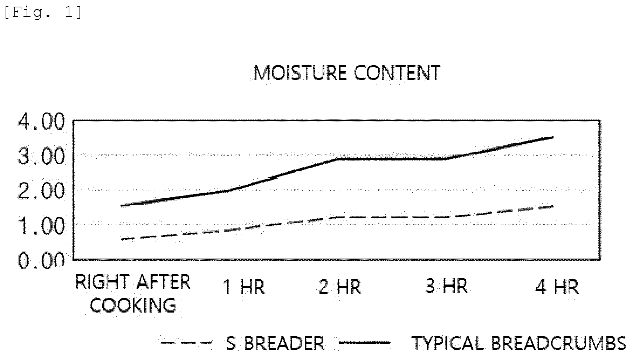

The results of determining the moisture content after cooking for the breadcrumbs "S breader" of the present application and the breadcrumbs of other manufacturers are shown in Table 8 and FIG. 1 below.

**[Table 8]**

| | | | | | | |
|---|---|---|---|---|---|---|
| S breader | Item | Right after cooking | 1 hr | 2 hrs | 3 hrs | 4 hrs |
| | Moisture content (%) | 0.58 | 0.82 | 1.19 | 1.22 | 1.47 |
| Breadcrum bs | Item | Right after cooking | 1 hr | 2 hrs | 3 hrs | 4 hrs |
| | Moisture content (%) | 0.91 | 1.17 | 1.7 | 1.64 | 1.99 |

In Table 8, the "S breader" is the breadcrumbs of the present application, and the "S breader" after cooking had a lower moisture content of about 0.3 to 0.5% and also showed a lower increase in moisture content than the breadcrumbs of other manufacturers.

### (2) Results of determining TA

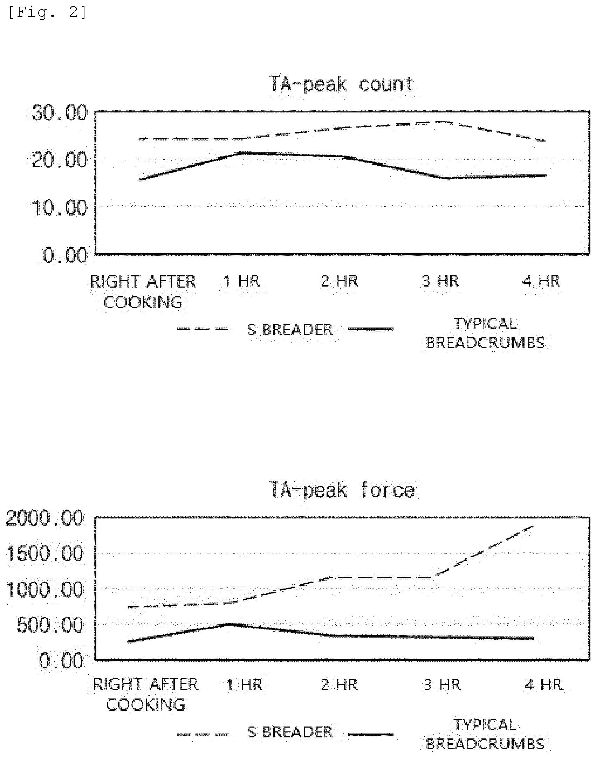

The results of determining TA after cooking for the breadcrumbs "S breader" of the present application and the breadcrumbs of other manufacturers are shown in Table 9 below, and the result data of determining TA are shown in a graph in FIG. 2.

**[Table 9]**

| ① S breader | | | | | | | | | | | |
|---|---|---|---|---|---|---|---|---|---|---|---|
| Item | Right after cooking | | 1 hr | | 2 hrs | | 3 hrs | | 4 hrs | | |
| | pea k coun t | pea k fore e | pea k coun t | peak forc e | peak count | pea k fore e | pea k coun t | pea k fore e | pea k coun t | peak forc e | |
| TA | | 21.00 0 | 670.60 6 | 19.000 | 599.65 4 | 29.000 | 1712.11 0 | 35.000 | 1647.92 0 | 19.00 0 | 1869.32 0 |
| | | 30.00 0 | 7G9.28 6 | 22.000 | 520.75 2 | 26.000 | 825.79 9 | 19.000 | 853.563 | 25.00 0 | 1796.94 4 |
| | | 21.00 0 | 767.89 8 | 32.000 | 1180.67 9 | 24.000 | 944.92 3 | 29.000 | 985.62 0 | 27.00 0 | 1946.79 8 |
| Average | | 24.00 0 | 715.93 0 | 24.333 | 767.02 8 | 26.333 | 1160.94 4 | 27.667 | 1162.36 8 | 23.66 7 | 1871 .021 |
| | Standa rd deviat ion | 5.190 | 48.985 | 6.807 | 360.39 8 | 2.517 | 481.026 | 8.083 | 425.653 | 4.163 | 74.941 |

| ② Breadcrumbs | | | | | | | | | | | |
|---|---|---|---|---|---|---|---|---|---|---|---|
| Item | | Right after cookina | | 1 hr | | 2 hrs | | 3 hrs | | 4 hrs | |
| | | pea k coun t | pea k fore e | pea k coun t | peak forc e | peak count | pea k fore e | pea k coun t | pea k fore e | pea k coun t | peak forc e |
| TA | | 15.00 0 | 233.85 8 | 20.000 | 433.30 7 | 18.000 | 383.35 6 | 13.000 | 116.27 6 | 14.00 0 | 252.72 3 |
| | | 15.00 0 | 262.80 8 | 23.000 | 457.03 7 | 20.000 | 146.41 3 | 20.000 | 532.85 4 | 15.00 0 | 298.99 6 |
| | | 17.00 0 | 232.43 4 | 20.000 | 510.90 4 | 23.000 | 480.29 2 | 14.000 | 242.401 | 20.00 0 | 274.08 0 |
| Average | | 15.66 7 | 243.03 3 | 21.000 | 467.08 3 | 20.333 | 336.68 7 | 15.667 | 297.17 7 | 16.33 3 | 275.266 |
| | Standa rd deviat ion | 1.155 | 17.140 | 1.732 | 39.762 | 2.517 | 171.762 | 3.786 | 213.623 | 3.215 | 23.159 |

In Table 9, the "S breader" is the breadcrumbs of the present application, and when determined after cooking, the S breader showed a higher count of peaks than breadcrumbs, and increased up to 3 hours and then decreased thereafter. These results indicate that the S breader is crispier after cooking than breadcrumbs, and remains crispy longer. When determining TA after cooking, the S breader showed a higher peak force than the breadcrumbs. In addition, compared to the breadcrumbs whose force increased up to 1 hour and then decreased thereafter, the force of the S breader steadily increased and the hardness thereof appeared stronger even after cooking, indicating that the strong hardness remained for a long period of time.

Although representative examples of the present application have been described above, the scope of the present application is not limited to the specific examples as described above, a person skilled in the art may modify the present application within the scope described in the claims of the present application.

## Claims

1. Breadcrumbs in the form of powder containing bread grains, wherein the bread grains comprise flour and starch, and
the breadcrumbs have a grain size distribution in which a proportion of bread grains having a size of 2 mm or greater is 60 to 70 wt%.

2. The breadcrumbs of claim 1, wherein the breadcrumbs have a grain size distribution in which a proportion of bread grains having a size of 3.35 mm or greater is 25 to 35 wt%.

3. The breadcrumbs of claim 1, wherein the bread grains comprise the flour in an amount of 35 to 55 wt%, and the starch in an amount of 10 to 30 wt%.

4. The breadcrumbs of claim 1, wherein the bread grains further comprise one or more components selected from the group consisting of an emulsifier and a sweetener.

5. The breadcrumbs of claim 4, wherein the bread grains comprise the emulsifier in an amount of greater than 0 wt% and 2 wt% or less, and the sweetener in an amount of greater than 0 wt% and 2 wt% or less.

6. The breadcrumbs of claim 1, wherein a liquid raw material is further added to a premix comprising flour and starch to prepare the bread grains, and the liquid raw material is one or a mixture of two or more selected from the group consisting of water, dairy products, eggs, honey, syrup, and vegetable oil.

7. The breadcrumbs of claim 1, wherein the breadcrumbs have a moisture content of less than 8%.

8. The breadcrumbs of claim 1, wherein the breadcrumbs have a water activity of less than 0.55 aw.

9. The breadcrumbs of claim 1, wherein the colorimetric analysis of the bread grains shows an L value of 70 to 80, an a value of 1 to 2, and a b value of 20 to 30.

10. A method for preparing breadcrumbs, the method comprising the steps of:
(a) preparing a premix comprising flour, starch, sugar, refined salt, a leavening agent, an emulsifier and a sweetener;
(b) adding a liquid raw material to the premix and mixing to form a dough;
(c) evening the dough; and
(d) cooling and pulverizing the dough subjected to evening to prepare bread grains.

11. The method of claim 10, further comprising a step (e) of drying the bread grains after the step (d).

12. The method of claim 10, wherein the liquid raw material is one or a mixture of two or more selected from the group consisting of water, dairy products, eggs, honey, syrup, and vegetable oil.

13. A food product comprising the breadcrumbs of claim 1.
